# EUROPEAN PATENT APPLICATION

(11) **EP 3 293 979 A1**
(43) Date of publication of application: **14.03.2018**
(21) Application number: 16188215.4
(22) Date of filing: 09.09.2016
(51) Int. Cl.: H04N 21/418, H04N 21/4367

(54) **HOST RENDERING DEVICE TAGGING BY A PORTABLE MULTIMEDIA PROCESSING DEVICE**

(71) Applicant: Nagravision S.A., 1033 Cheseaux-sur-Lausanne (CH)
(72) Inventor: DESARZENS, Philippe, 1030 Bussigny (CH); GREMAUD, Fabien, 1618 Châtel-St-Denis (CH); BUSSY, Jean-Luc, 1304 Cossonay-Ville (CH)
(74) Representative: Leman Consulting S.A.

(57) **Abstract**

A method to tag a host rendering device by using a portable multimedia processing device configured to grant access to conditional access multimedia content provided by a specific operator. The multimedia content is rendered by the host rendering device that is connected to the portable multimedia processing device via a communication link. The portable multimedia processing device stores operating specific data comprising an operator identifier and a portable multimedia processing device identifier. This operator specific data is transmitted to the host rendering device to be stored in a non-volatile memory, the host rendering device thus becomes tagged with the operator specific data. The disclosure further relates to a dongle to be connected via the communication link to the host rendering device including a television set, the communication link including a USB link or a HDMI link or a combination thereof. The dongle tags the television set with its identifier and the identifier of the operator.

## Description

### Introduction

A portable multimedia processing device for processing access controlled multimedia content is disclosed. In particular, the portable multimedia processing device, connected to a host rendering device, processes multimedia content streams received from an operator, the multimedia content once processed is rendered by a display of the host rendering device.

### Technical background

A portable multimedia processing device configured to process multimedia content for rendering by a host rendering device is generally known as a television dongle connected to a television set or a personal computer via a USB (Universal Serial Bus) port for example. The television dongle may be used to descramble access controlled multimedia content provided by, e.g., a television tuner, a local network or the Internet. In this case a subscriber purchases specific access rights to be recorded in the dongle which then operates as a Pay-TV security module.

Another type of television dongle is configured to be connected to a High-Definition Multimedia Interface (HDMI) port of the television set or a video display monitor. The dongle looks like a USB flash memory stick, and is small and convenient to watch television programs provided by various sources by using a built-in decoder. If the television dongle is inserted into an HDMI socket of a common television set, the common television set becomes a smart television set which can be used to watch a movie, surf the Internet, play a game, listen to music, and the like. Generally, the television dongle or HDMI dongle is operated and controlled by using a remote control.

In some cases, when a user buys a television set compliant with services or a given package of television channels provided by a given operator, the television set may include a portable multimedia processing device in form of a television dongle. The dongle which is specific to the operator operates according to a standard of conditional access defined by the operator. For example, the operator may offer an access to the television channels of the package for a limited time period to each new user having bought a television set in a particular area where the operator provides services such as conditional access multimedia content.

As the television set has a generic configuration, a television dongle that is specific to the operator will operate on each television set of a recent model provided with the appropriate sockets of USB or HDMI type for example. A problem may occur when users do not use the dongle provided with the television set and give or sell the dongle to other users without control of the operator. In order to prevent undesirable distribution of dongles on a black market, the operator wishes to maintain supervisory of the dongles and the access conditions or rights stored therein.

### Brief description of the drawings

The following detailed description refers to the attached drawings in which:

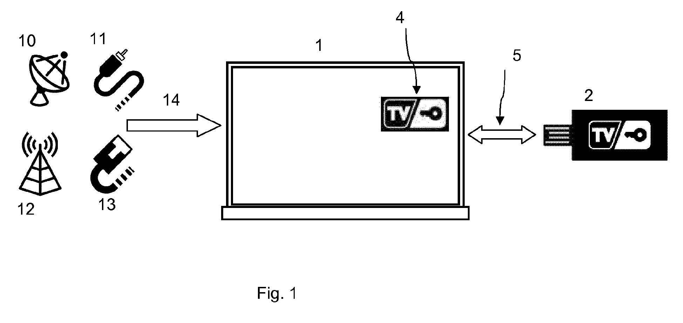

Figure 1 shows an overview of an example where an operator specific dongle to be connected to a television set is used for accessing conditional access multimedia content provided by the operator via different transmission modes. The dongle is configured to tag the television set with operator specific data.

### Description

The problem of uncontrolled distribution of television dongles may be solved by a particular feature implemented in the television dongle which becomes capable to tag the host rendering device such as a television set.

Embodiments of the present disclosure provide a method to tag a host rendering device by using a multimedia processing portable device, according to claim 1, and a multimedia processing portable device configured to tag the host rendering device according to claim 8.

The portable multimedia processing device is connected with the host rendering device via a communication link as for example a USB link or a HDMI link or a combination thereof.

The portable multimedia processing device has an operator identifier and a portable multimedia processing device identifier. When the communication link is established, the portable multimedia processing device sends a request containing an operator identifier to the host rendering device for retrieving operator specific data stored in a non-volatile memory of the host rendering device. The host rendering device verifies presence of operator specific data and transmits in response to the request the operator specific data corresponding the operator identifier of the request. When no data is present in the non-volatile memory the host rendering device may transmit a response to the request including a message informing the portable multimedia processing device on absence of data.

If operator specific data is absent in the non volatile memory, the portable multimedia processing device transmits to the host rendering device a request to allocate a secure storage area in a non-volatile memory of the host rendering device. The portable multimedia processing device receives a response to the request indicating allocation of the secure storage area and transmits a command containing the operator identifier and the portable multimedia processing device identifier to the host rendering device. The command enables storing the operator identifier and the portable multimedia processing device identifier in the secure storage area of the non-volatile memory previously allocated.

If operator specific data is present in the non volatile memory, the portable multimedia processing device transmits to the host rendering device a request to retrieve said stored operator specific data from the non volatile memory. In response to the request, the portable multimedia processing device receives the stored operator specific data, analyzes this data and compares the operator identifier and the portable multimedia processing device identifier with the analyzed operator specific data.

Depending on the result of the comparison, the portable multimedia processing device may enable various actions related to the access to the conditional access multimedia content.

The actions may be defined by a state or rules stored in a memory of the portable multimedia processing device by the operator. The state may comprise a set of instructions and parameters forming rules to be executed by the portable multimedia processing device in function of operating conditions.

The access to the conditional access multimedia content therefore depends on the state and the data stored in the secure area of the non-volatile memory of the host rendering device. For example the portable multimedia processing device can be set in a state defining its behavior after comparison of the operator identifier and the portable multimedia processing device identifier with the analyzed operator specific data.

According to a standard mode, the state may enable authorizing the portable multimedia processing device to access the multimedia content provided by the operator, when the portable multimedia processing device identifier matches with the analyzed operator specific data.

When the portable multimedia processing device identifier differs from the analyzed operator specific data, the state may enable a warning message to be displayed on a screen associated with the host rendering device. The message may inform a user of the host rendering device that another portable multimedia processing device has already been connected to the host rendering device and that access to multimedia content provided by the operator could be restricted or blocked. For example, by restricted access, only a few television channels among a bouquet managed by the operator may be accessed.

According to an embodiment, the state may enable authorizing the portable multimedia processing device to access the multimedia content even the comparison failed. This authorization may be limited to a predefined time period defined by expiration temporal data such as an expiration date stored in the portable multimedia processing device in addition to the state. A time checking is performed by comparing the current time with the stored expiration date. The current time may be provided, for example, by control messages transmitted to the portable multimedia processing device in a stream of multimedia content.

In other words, the portable multimedia processing device tags the host rendering device in a permanent way. However, other portable multimedia processing devices of different operators can still be used since they will tag the host rendering device with their own identifier. The host rendering device thus may be tagged by multiple portable multimedia processing devices each granting access to multimedia content provided by a different operator.

According to an embodiment, the state may vary in function of time in case an expiration date stored in the portable multimedia processing device is checked.

The method of the disclosure may be performed upon connection of the portable multimedia processing device to the host rendering device in a boot process of the portable multimedia processing device. When the portable multimedia processing device stays connected to the host rendering device, the method may be performed at each start of the host rendering device at power on or at passing from a standby state to an active state. According to an embodiment, the method may also be performed periodically with a period defined by the state for example.

The host rendering device is not locked with a portable multimedia processing device of a given operator in a same way as a smartphone can be locked with a subscriber identity module (SIM) or SIM locked with an operator. The host rendering device may accept different portable multimedia processing devices of different operators, each portable multimedia processing devices transmitting the operator identifier and their own identifier to the host rendering device for storing in secure storage areas of the non-volatile memory.

The portable multimedia processing device preferably forms a dongle adapted to be connected to any host rendering devices able to render the processed multimedia content data. The portable multimedia processing device is thus hereafter designated by the term "dongle".

According to preferred embodiment, the dongle comprises a standard universal serial data bus configured to receive from the host rendering device scrambled multimedia content data and control data, to return control data to the host rendering device, and to receive power provided by the host rendering device. The control data exchanged between the dongle and the host rendering device may comprise operating data, commands and parameters. The dongle is further configured to forward the multimedia content data to the host rendering device after having been descrambled and decompressed by the dongle.

Figure 1 shows an example of a dongle 2 specific to an operator connectable to a host rendering device 1 including a television set via a communication link 3. The multimedia content 14 may be provided by different sources managed by the operator. For example, the multimedia content may be delivered via a cable network 11, a satellite 10, a terrestrial emitter 12, or from one or more servers on an IP (Internet Protocol) network 13. The television set is tagged with operator specific data represented by a logo 4 of the dongle operator (TV Key). The communication link 5 between the dongle and the television set may be of USB type or HDMI type or a combination thereof.

The dongle comprises the necessary hardware and software modules for descrambling and decoding scrambled multimedia content data under control of the host rendering device. The host rendering device operates as multimedia content streams receiver and pre-processor for the multimedia content data and as a media player for the multimedia content once processed by the dongle.

The host rendering device may allow multimedia content selection in a stream delivering multiple scrambled content data packets by using a browser or an electronic program guide. According to a configuration example, the selected multimedia content, demultiplexed from the stream by the host rendering device is forwarded to the dongle through a USB (Universal Serial Bus) type port. After processing by the dongle, the multimedia content data packets are returned to the host rendering device through a HDMI port. Other types of ports allowing a high data throughput may also be envisaged depending on the format and resolution of the multimedia content as for example ports and protocols adapted to ultra high definition (UHD) video content including 4K UHD (2160p) and 8K UHD (4320p).

According to a standard configuration example, the main role of the dongle consists of descrambling compressed multimedia content received by the host rendering device. The multimedia content is streamed by the operator to the host rendering device via at least one DVB (Digital Video Broadcast) tuner and/or via a local wired or wireless network such as a cable or Wi-Fi. The dongle descrambles multimedia content by protecting its decryption key at the highest security level, while the resulting compressed multimedia content data is protected by the host rendering device.

In this example, the dongle descrambles the compressed multimedia received by the host rendering device while the host rendering device decodes the descrambled content.

The notion of descrambling is defined herein as decrypting multimedia content data by using a cryptographic algorithm with at least one cryptographic key or control word provided by entitlement control messages transmitted by a conditional access system. The control word can be used only when access rights of a subscriber recorded in the host rendering device or in the portable device are valid.

The notion of decoding is defined herein as decompressing multimedia content data by using codec algorithms. The decoding operation is performed after descrambling the multimedia content data. A codec comprises a computer program capable of encoding / compressing or decoding / decompressing a digital data stream. Once decoded / decompressed, the multimedia content data is ready to be rendered by the host rendering device as audio content, video content or audio / video content.

A preferred embodiment of the portable multimedia processing device according to the disclosure comprises a pay-TV applications dongle configured to be plugged into a corresponding port of a host rendering device. The dongle is further configured to descramble and decode multimedia content streams for rendering by a universal host rendering device that is the same for all subscribers of a pay-TV operator such as for example a television set, a tablet, a smartphone or a personal computer.

An example of a pay-TV dongle may comprise a standard universal serial data bus associated with a high-speed data path configured to provide the decoded multimedia content data directly to the host rendering device.

The standard universal serial data bus is configured to receive from the host rendering device scrambled compressed multimedia content data and control data, to return control data to the host rendering device, and to receive power provided by the host rendering device.

The standard universal serial data bus may be of type USB 2.0, USB 3.0 or USB 3.1, where the different types stand out from their throughput having a maximum value of respectively 480 Mbit/s, 5 Gbit/s and 10 Gbit/s.

The high-speed data path may include a standardized display port based on a technology developed by the Video Electronics Standards Association (VESA) allowing transmitting audio / video data intended to be displayed.

According to a practical example, the standard universal serial data bus and the high-speed data path may be grouped in a standardized reversible USB type C connector of 24 pins. According to a further embodiment, the high-speed data path may include a HDMI port comprising a standard HDMI, mini-HDMI and micro-HDMI connector. The first port, including the standard universal serial data bus, uses physical connections allowing communication performance according to USB communication standard (i.e. USB 2.0, USB 3.0 or USB 3.1), including USB, mini-USB and micro-USB.

According to a further embodiment, the communication link comprising the standard universal serial bus and the high-speed data path between the host rendering device and the dongle may be wireless. In this case, the host rendering device and the dongle may comprise a USB / display port or a USB / HDMI transceiver using an appropriate communication protocol allowing broadband wireless communication between the host rendering device and a distant dongle in conditions similar to those of a wired connection. The distant dongle, including the same functionalities as those of the wired dongle, may be in form of a dedicated dongle box, a tablet, a smartphone, or a personal computer placed close to the host rendering device as for example in a same room.

In addition to the protection of the multimedia content data, the dongle may provide a full operator-specific user interface experience in a similar way as a standard television set-top-box. The dongle user interface can be controlled using the standard CEC (Consumer Electronic Control) but mapped over USB as for example mapping the Standard CEC in an existing Dongle USB Command & Control profile.

The host rendering device such a television set, a tablet or a personal computer, having a universal configuration independent of a multimedia content operator, may comprise standard hardware and software modules for receiving content streams. These modules may be configured in a way to operate in association with any multimedia processing devices connected to the host rendering device, even when the host rendering device is connected to devices other than a dongle.

When the dongle is connected to the host rendering device, a specific dongle driver may generally be installed automatically or manually by using an appropriate user interface produced by an operating system of the host rendering device.

In fact, the host rendering device may comprise a television application and a browser application for searching and selecting specific services for controlling playback of multimedia content provided by one or more operators. Several middleware modules may be implemented over the operating system and the dongle driver for managing one or more tuner modules configured to receive the multimedia streams. The tuner modules may comprise for example: a Digital Terrestrial Television DTT, cable or satellite DVB receiver module, an IP network module, or a Hybrid Broadcast Broadband TV module. A media player allows playing the received multimedia content once processed by the host rendering device and the dongle.

According to the example of the television application, when the dongle is plugged into the USB connector for example, the television set may start automatically a search of services or programs provided by the operator having configured the dongle. The user interface provided by the dongle on the television screen may invite the user to select and activate a service provided by the operator with a predefined period of free access for example. When the service is activated, the dongle performs the above disclosed method of tagging the television set. The dongle transmits to the television set operator specific data comprising the identifier of the dongle and an identifier of the operator. This operator specific data is stored in a secure memory of the television set so that the television set becomes assigned to the operator. This assignation is designated by the term "verticalization" contrarily of a "horizontal" state where the television set remains neutral with a generic configuration accepting services from all available operators.

A television set may be tagged by more than one dongle. Each dongle being specific to an operator may be able to perform the disclosed method. The non-volatile memory of the television set may be divided into several secure areas allocated to each operator so that each dongle specific to an operator may transmit its identifier and the operator identifier to be stored into the respective secure area of the non-volatile memory. The television set thus may be "verticalized" for multiple operators.

Once assigned to the operator of the dongle, the television set receives and stores in local memory operator specific applications comprising for example an electronic program guide EPG, a personal video recorder PVR allowing recording content on a local hard disk for example, applications related to on demand video VOD access on servers of the operators, games, messaging, etc. The operator specific applications may be installed in addition to already installed application in the television set.

The operator of the dongle manages a conditional access system which may allow access to content by various television sets of different brands, models and firmware recorded in a white list managed and regularly updated by the operator. The operator also manages updates of the dongle firmware, operating system and applications software programs and drivers to be installed in the television set.

## Claims

1. A method to tag a host rendering device by using a portable multimedia processing device configured to grant access to conditional access multimedia content provided by a specific operator, said multimedia content being rendered by the host rendering device, comprising:
connecting the portable multimedia processing device with the host rendering device via a communication link, said portable multimedia processing device having an operator identifier and a portable multimedia processing device identifier,
requesting by the portable multimedia processing device operator specific data stored in a non-volatile memory of the host device, said request containing the operator identifier,
receiving by the portable multimedia processing device a response to the request indicating absence or presence in non-volatile memory of operator specific data related to said operator identifier,
if the operator specific data is absent in the non volatile memory, transmitting to the host rendering device a request to allocate a secure storage area in the non-volatile memory of the host rendering device,
receiving by the portable multimedia processing device a response to the request indicating allocation of the secure storage area, transmitting a command comprising the operator identifier and the portable multimedia processing device identifier to the host rendering device, the command enabling storing the operator identifier and the portable multimedia processing device identifier in the secure storage area of the non-volatile memory,
if the operator specific data is present in the non volatile memory, transmitting to the host rendering device a request to retrieve said stored operator specific data from the non volatile memory,
receiving by the portable multimedia processing device the stored operator specific data in response to the request, analyzing the received operator specific data, and
comparing the portable multimedia processing device identifier with the analyzed operator specific data,
enabling by the portable multimedia processing device an action related to the access to the conditional access multimedia content depending on the result of the comparison.

2. The method according to claim 1 **characterized in that** the action related to the access to the conditional access multimedia content to be enabled is defined by a state stored by the operator in a memory of the portable multimedia processing device.

3. The method according to claim 2 **characterized in that** the state enables authorizing, by the portable multimedia processing device, access to the conditional access multimedia content when the comparison of the analyzed operator specific data with the operator identifier and the portable multimedia processing device identifier gives a match.

4. The method according to claim 2 **characterized in that** the state enables blocking, by the portable multimedia processing device, access to the conditional access multimedia content when the comparison of the analyzed operator specific data with the operator identifier and the portable multimedia processing device identifier shows a difference.

5. The method according to claim 2 **characterized in that** the state enables restricting, by the portable multimedia processing device, access to the conditional access multimedia content when the comparison of the analyzed operator specific data with the operator identifier and the portable multimedia processing device identifier shows a difference.

6. The method according to claim 2 **characterized in that** the state enables authorizing, by the portable multimedia processing device, access to the conditional access multimedia content when the comparison of the analyzed operator specific data with the operator identifier and the portable multimedia processing device identifier shows a difference, the access being limited in time by expiration temporal data stored in a memory of the portable multimedia processing device.

7. The method according to anyone of claim 1 to 6 **characterized in that**, the portable multimedia processing device includes a dongle to be connected via the communication link to the host rendering device including a television set, the communication link including a USB link or a HDMI link or a combination thereof.

8. A portable multimedia processing device configured to tag a host rendering device, the portable multimedia processing device being further configured to grant access to conditional access multimedia content provided by a specific operator, said multimedia content being rendered by the host rendering device, the multimedia processing device is **characterized in that** it is further configured to:
connect with the host rendering device via a communication link, said portable multimedia processing device having an operator identifier and a portable multimedia processing device identifier,
request operator specific data stored in a non-volatile memory of the host device, said request containing the operator identifier,
receive a response to the request indicating absence or presence in non-volatile memory of operator specific data related to said operator identifier,
transmit to the host rendering device a request to allocate a secure storage area in the non-volatile memory of the host rendering device if the operator specific data is absent in the non volatile memory,
receive a response to the request indicating allocation of the secure storage area, transmit a command comprising the operator identifier and the portable multimedia processing device identifier to the host rendering device, the command enabling storing the operator identifier and the portable multimedia processing device identifier in the secure storage area of the non-volatile memory,
transmit to the host rendering device a request to retrieve said stored operator specific data from the non volatile memory, if the operator specific data is present in the non volatile memory,
receive the stored operator specific data in response to the request, analyze the received operator specific data, and compare the portable multimedia processing device identifier with the analyzed operator specific data,
enable an action related to the access to the conditional access multimedia content depending on the result of the comparison.

9. The portable multimedia processing device according to claim 8 **characterized in that** it comprises a memory configured to store a state defining the action related to the access to the conditional access multimedia content to be enabled.

10. The portable multimedia processing device according to claim 9 **characterized in that** the state is configured to enable authorizing access to the conditional access multimedia content when the comparison of the stored operator specific data with the operator identifier and the portable multimedia processing device identifier gives a match.

11. The portable multimedia processing device according to claim 9 **characterized in that** the state is configured to enable blocking access to the conditional access multimedia content when the comparison of the stored operator specific data with the operator identifier and the portable multimedia processing device identifier shows a difference.

12. The portable multimedia processing device according to claim 9 **characterized in that** the state is configured to enable restricting access to the conditional access multimedia content when the comparison of the stored operator specific data with the operator identifier and the portable multimedia processing device identifier shows a difference.

13. The portable multimedia processing device according to claim 9 **characterized in that** the state is configured to enable authorizing access to the conditional access multimedia content when the comparison of the stored operator specific data with the operator identifier and the portable multimedia processing device identifier shows a difference, the access being limited in time by expiration temporal data stored in a memory of the portable multimedia processing device.

14. The portable multimedia processing device according to anyone of claim 8 to 13 **characterized in that** it forms a dongle configured to be plugged into a corresponding port of a host rendering device selected in a group comprising a television set, a tablet, a smartphone or a personal computer.
